# EUROPÄISCHE PATENTANMELDUNG

(11) **EP 2 582 030 A2**
(43) Veröffentlichungstag der Anmeldung: **17.04.2013**
(21) Anmeldenummer: 12007080.0
(22) Anmeldetag: 12.10.2012
(51) Int. Cl.: H02M 7/483

(54) **Schaltungsanordnung mit Wechselrichter**

(30) Priorität: 14.10.2011 DE 102011054519
(71) Anmelder: Steca Elektronik GmbH, 87700 Memmingen (DE)
(72) Erfinder: Petersson, Sven Dipl.-Ing., 87700 Memmingen (DE); Winter, Andreas Dipl.-Ing., 87743 Egg a. d. Günz (DE); Schekulin, Dirk Dr.-Ing., 9320 Arbon (CH)
(74) Vertreter: Schulz, Manfred

(57) **Zusammenfassung**

Die Erfindung betrifft eine Schaltungsanordnung, insbesondere Wechselrichterstufe mit gleichstromseitiger Phasenumschaltung (T₁₂, T₃₄) mit zwei eingangsseitigen Gleichspannungsquellen (U_{dc1}, U_{dc2}), zwei funktional gekoppelten Wechselschaltern (S₁₂, S₃₄), einer Kommutierungszelle (KC, S₅₆), einer Drossel (L) sowie einer ausgangsseitigen Wechselspannungsquelle (U_{AC}).

## Beschreibung

Die Erfindung betrifft eine Schaltungsanordnung, insbesondere eine Wechselrichterstufe. Derartige Schaltungsanordnungen sind bekannt. Sie werden beispielsweise eingesetzt, um Gleichspannungen in Wechselspannungen umzuwandeln. Dabei werden derartige Schaltungsanordnungen heutezutage im verstärktem Umfang benötigt, da ausgehend von dem durch Solarstrom aus Photovoltaikanlagen bereit gestellten Gleichstrom einen Wechselstrom zu erzeugen, der beispielsweise im normalen Stromnetz einsetzbar ist. Die dazu bekannten Schaltungsanordungen und die hierauf aufbauenden Umrichter sind recht kompliziert und damit kostenaufwendig und durch einen relativ geringen Wirkungsgrad gekennzeichnet.

Ausgehend von diesem Stand der Technik ist es Aufgabe der Erfindung eine Schaltungsanordung beziehungsweise Umrichter, zur Verfügung zu stellen, die kostengünstig herstellbar ist.

Die Erfindung geht von diesem Stand der Technik aus und schlägt zur Lösung der gestellten Aufgabe eine Schaltungsanordnung, insbesondere Wechselrichterstufe mit insbesondere gleichstromseitiger Phasenumschaltung vor, welche über
- zwei eingangsseitigen Gleichstromspannungsquellen,
- zwei funktional gekoppelten Wechselschaltern,
- eine Kommutierungszelle
- eine Drossel sowie
- eine ausgangsseitige Wechselspannungsquelle verfügt.

Die erfindungsgemäße Aufgabe wird aber auch durch folgende nachbeschriebe Schaltungsanordnung gelöst. Diese Schaltungsanordnung zeichnet sich dadurch aus, dass zwei Gleichspannungsquellen und zwei Wechselschalter in Reihe geschaltet sind, wobei zwischen den beiden Gleichspannungsquellen ein erstes Verbindungsstück und zwischen den beiden Wechselschaltern ein zweites Verbindungsstück besteht und eine Verbindungsbrücke zwischen dem ersten und dem zweiten Verbindungsstück vorgesehen ist und sich ausgangsseitig zwischen den Teilzweigabgängen der Wechselschalter eine Kommutierungszelle anschließt und zwischen dem dem Wechselschaltern abgewandten Ausgangsstrang der Kommutierungszelle und der Verbindungsbrücke in einer Wechselspannungsquelle eine Wechselspannung abgreifbar ist.

Durch diese Schaltungsanordnung gelingt es die Kosten für eine derartige Schaltungsanordnung erheblich zu reduzieren, da sie einfach aufgebaut ist und insbesondere von einem hohen Wirkungsgrad gekennzeichnet ist.

Dabei sind die Wechselschalter funktional gekoppelt und werden mit der Grundschwingung des gewünschte Ausgangssignales, zum Beispiel 50 Hz, umgeschaltet. Geschickter Weise entspricht die Grundschwingung der Netzfrequenz.

Der erfindungsgemäße Vorschlag erlaubt es, eine sehr kompakt und kleinbauende Kommutierungszelle, die üblicher Weise mit einer Schaltfrequenz größer 5 kHz, bevorzugt größer 10, 15, 20, 25, 30, 35, 40, 45 oder 50 kHz betrieben wird, zu realisieren. In der einfachsten Ausgestaltung wird die Kommutierungszelle mit einem Wechseltaktschalter beziehungsweise Umschalter realisiert, diese kompakte Bauweise reduziert damit die Erzeugung von HF-Strömen, die negativ für die elektromagnetische Verträglichkeit sind, da durch den erfindungsgemäßen Vorschlag die elektromagnetische Verträglichkeit sehr viel einfacher zu bewirken ist. Da sehr viel weniger hochfrequente Ströme auftreten, kann auf kostenaufwendige Metallgehäuse und so weiter verzichtet werden, was sich ebenfalls positiv für die Gesamtkosten einer erfindungsgemäßen Schaltungsanordnung auswirkt.

Die erfindungsgemäß vorgeschlagene Schaltungsanordnung bzw. Topologie eignet sich insbesondere für unipolare Halbleiterschalter wie zum Beispiel MOSFETs, in denen sich durch Parallelschaltung die Verluste nahezu beliebig minimieren lassen. Bevorzugt werden daher die Wechselschalter, aber auch die Elemente der Kommutierungszelle, nämlich dort angeordnete Wechseltaktschalter als MOSFETs ausgebildet. Der zwischen der Gleichspannungs- und der Wechselspannungsquelle vorgesehene Zwischenschaltkreis besteht dabei, vereinfacht beschrieben, aus zwei "Umschalter"-Gruppen.

Die erste Gruppe ist realisiert durch die zwei funktional gekoppelten Wechselschalter, die die Phasenumschaltung mit der Grundschwingung des Ausgangssignales (zum Beispiel der Netzfrequenz) erzeugten. Der dritte "Umschalter" ist der Schalter der Kommutierungszelle, zum Beispiel ein Wechseltaktschalter, der mit deutlich höherer Betriebsfrequenz zum Beispiel in Pulsweitenmodulation bei zum Beispiel 20 kHz zur Stromformung betrieben wird, wobei hierzu auch die Drossel im Ausgangsstrang, dem Wechselschalter abgewandt, auf der anderen Seite der Kommutierungszelle angeordnet ist.

Im Zusammenhang mit dieser Erfindung und Anmeldung bedeutet der Begriff "Quelle" zum Beispiel in "Gleichspannungsquelle" oder "Wechselspannungsquelle" ein Element, welches Energie zum Beispiel in Form von Gleichspannung oder Wechselspannung zur Verfügung stellt. Der Begriff "Quelle" ist insofern nicht beschränkend dahingehend auszulegen, dass der erfindungsgemäße Gedanke nur in einer Richtung der Umformung eines Gleichstromes zu einem Wechselstrom funktioniert. Der erfindungsgemäße Gedanke ist gleichwohl auch bidirektional einsetzbar. Bevorzugt ist dabei die Gleichspannungsquelle an der Schaltungsanordnung eingangsseitig und die Wechselspannungsquelle ausgangsseitig vorgesehen und stellt insbesondere den Anschluss an ein Verbrauchernetz dar, welches dann aus dieser Wechselspannungsquelle versorgt wird. Umgekehrt kann die Gleichspannungsquelle durch die Wechselspannungsquelle versorgt sein, und die Gleichspannungsquelle versorgt dann ihrerseits einen Energiespeicher. Die Spannungsquelle wird bereits durch die Abgreifbarkeit der Spannungen an eingangsseitigen oder ausgangsseitigen Leitern oder Klemmen gebildet. Eine ideale Gleich- beziehungsweise Wechselspannungsquelle bringt an ihren äußeren Anschlüssen eine Spannung ein, die unabhängig von der Richtung und Größe des fliessenden Stromes ist.

Ein weiterer wesentlicher Gesichtspunkt des Vorschlages ist, dass die Schaltungsanordnung, insbesondere die Wechselrichterstufe transformatorlos ausgebildet ist und daher sonst anfallende Verluste des Transformators durch den Vorschlag vermieden werden.

In einer bevorzugten Ausgestaltung des Vorschlages ist vorgesehen, dass die beiden Gleichspannungsquellen und die beiden Wechselschalter in Reihe geschaltet sind, wobei die Schaltzustände der Wechselschalter einen Kurzschluss der Gleichspannungsquellen vermeiden.

Des Weiteren ist vorgesehen, dass zwischen der ausgangsseitig an dem den Wechselschaltern abgewandten Ausgangsstrang der Kommutierungszelle und der Verbindungsbrücke in der Wechselspannungsquelle eine Wechselspannung abgreifbar ist.

Ein weiterer günstiger Aspekt des Vorschlages ist darin zu sehen, dass zwischen den Teilzweigabgängen der Wechselschalter eine Kommutierungszelle vorgesehen ist, die wahlweise über die Wechselschalter mit der ersten oder zweiten Gleichspannungsquelle verbindbar ist. Jeder Wechselschalter besitzt, der Gleichspannungsquelle abgewandt, einen Teilzweigabgang. Zwischen diesen beiden Teilzweigabgängen befindet sich die Kommutierungszelle, die zum Beispiel als Wechseltaktschalter ausgebildet ist, gegebenenfalls aber auch noch weitere Elemente aufzuweisen vermag. Die Kommutierungszelle ist für die sinusförmige Stromformung verantwortlich und erreicht dies durch ein verhältnismäßig hochfrequentes Umschalten der Kommutierungszelle zwischen den beiden stromliefernden Teilzweigabgängen. Zwischen den beiden Wechselschaltern endet die Verbindungsbrücke, die somit auch das Referenzpotential bildet, um welches die Sinusspannung realisiert wird. Somit ist die erste Schalterstellung der Wechselschalter für den positiven Spannungsverlauf der zu erzeugenden Wechselspannung und die zweite Schalterstellung der Wechselschalter für den negativen Spannungsverlauf der zu erzeugenden Wechselspannung vorgesehen. Daher ist wahlweise über die Wechselschalter die Kommutierungszelle mit der ersten oder zweiten Gleichspannungsquelle verbindbar.

Günstiger Weise ist in dem den Wechselschaltern abgewandten Ausgangsstrang der Kommutierungszelle (der Wechselspannungsquelle zugewandt) eine Drossel oder Induktivität vorgesehen, die insbesondere der Stromformung dient.

Die Kommutierungszelle ist bevorzugter Weise mit möglichst verlustarmen Bauteilen realisiert, da diese aufgrund der hohen Schaltfrequenz entsprechend belastet werden. Geschickter Weise sind diese daher als unipolare Halbleiterschalter realisiert. So ist zum Beispiel in einer ersten Variante die Kommutierungszelle gebildet aus einem Wechseltaktschalter, der wahlweise auf den ersten oder zweiten Teilzweigabgang des Wechselschalters schaltbar ist. Dieser Wechseltaktschalter hat daher die Funktion eines Umschalters. Der Wechseltaktschalter kann aber auch insbesondere aus zwei zueinander in Reihe angeordneten Taktschaltern bestehen, wobei sich zwischen den beiden Taktschaltern der Ausgangsstrang in Richtung der Wechselspannungsquelle anschließt.

Insbesondere ist des Weiteren vorgesehen, dass die Kommutierungszelle aus einer zwischen den Wechselschaltern angeordneten Kapazität und einem zur Kapazität parallelen Wechseltaktschalter besteht.

Insbesondere diese Kapazität, zum Beispiel ein Kondensator ist von Vorteil, da dieser zum einen die elektromagnetische Verträglichkeit der gesamten Schaltungsanordnung verbessert und auch einen Beitrag zur Reduzierung von Verlusten leistet.

Geschickter Weise ist dabei die Anordnung so gewählt, dass der den Wechselschaltern abgewandte Ausgangsstrang der Kommutierungszelle zwischen den beiden Taktschaltern beginnt.

Die Erfindung schlägt des Weiteren vor, dass die Taktschalter funktional gekoppelt sind und mit der Grundschwingung des Ausgangssignals, zum Beispiel 50 Hz, umgeschaltet werden.

Eine Weiterbildung der erfindungsgemäßen Schaltungsanordnung zeichnet sich auch dadurch aus, dass die Taktschalter abwechselnd schalten und pulsbreitenmoduliert werden, insbesondere mit einer höheren Schaltfrequenz als die Frequenz der Grundschwingung. Dabei werden Schaltfrequenzen zum Beispiel von 20 kHz eingesetzt.

Des Weiteren zeichnet sich die Erfindung dadurch aus, dass die Taktschalter gute Kommutierungseigenschaften aufweisen. Erfindungsgemäß ist es weiterhin vorgesehen, dass mit Hilfe einer überlagerten Regelung eine Drossel ein bipolares sinusförmiges Stromsignal erzeugt, das dann in eine Wechselspannungsquelle eingespeist wird.

In einer Weiterentwicklung der Schaltungsanordnung ist vorgesehen, dass ein Wechselschalter gebildet ist von zwei hintereinander angeordneten, bevorzugt als Halbleiterschalter ausgebildeten Schaltern, wobei das Verbindungsstück zwischen den beiden Wechselschaltern wahlweise mit dem einen oder anderen Teilzweigabgang über den in Stromflussrichtung ersten Schalter der Wechselschalter verbunden ist. Erfindungsgemäß sind zwei Wechselschalter in Reihe vorgesehen, da ein Wechselschalter seinerseits von zwei hintereinander angeordneten bevorzugt als Halbleiterschalter (zum Beispiel MOSFETs) ausgebildeten Schaltern besteht, befinden sich insgesamt vier Schalter in Reihe hintereinander. Die beiden mittleren (nachfolgend der zweite und dritte Schalter) sind durch das (zweite) Verbindungsstück miteinander verbunden, an welches auch die Verbindungsbrücke anschließt. Je nach Stellung des in Stromflussrichtung ersten Schalters (geöffnet oder geschlossen) des jeweiligen Wechselschalters ist dann dieses Verbindungsstück mit dem Teilzweigabgang des jeweiligen Wechselschalters leitend verbunden. Durch die Anordnung der beiden Wechselschalter wird in einfacher Weise eine Phasenumschaltung erreicht, die Realisierung des Wechselschalters durch zwei Halbleiterschalter ist eine sehr kostengünstige Form, wie bereits erwähnt sind die beiden Wechselschalter funktional miteinander gekoppelt, um einen Kurzschluss zu vermeiden. Die erfindungsgemäße Schaltungsanordnung bewirkt letztendlich, dass je nach Stellung der Wechselschalter entweder die erste Gleichspannungsquelle oder die zweite Gleichspannungsquelle an der Kommutierungszelle anliegt.

In einer weiteren bevorzugten Ausgestaltung ist vorgesehen, dass die Kommutierungszelle auch noch eine weitere Impedanz aufweist. Insbesondere ist diese bevorzugt zwischen zumindest einem Teilzweigabgang und der (bevorzugt parallel zum Taktschalter vorgesehenen) Kapazität angeordnet. Die hier vorgesehene Impedanz bewirkt eine Strombegrenzung und/oder einen Filter für die Verbesserung der elektromagnetischen Verträglichkeit. Die Impedanz ist zum Beispiel als Parallelschaltung einer Induktivität und eines Widerstandes realisierbar.

Wie bereits ausgeführt, wird die Kommutierungszelle bzw. die die Kommutierungszelle bildenden Wechseltaktschalter bzw. Taktschalter bevorzugt pulsweitenmoduliert betrieben, wobei die Schaltfrequenz der Kommutierungszelle bzw. ihrer Bauteile mindestens 100 mal größer ist als die Grundfrequenz bzw. Netzfrequenz. Insbesondere ist vorgesehen, dass die Schaltfrequenz bevorzugt mindestens 200 mal, insbesondere bevorzugt mehr als 500 mal größer ist als die Grundfrequenz. In besonders gelagerten Spezialfällen, zum Beispiel bei verhältnismäßig niedrigen Grundfrequenzen, kann das Verhältnis auch größer 300, 600 oder 1000 sein.

Des Weiteren umfasst die Erfindung auch einen Umrichter, insbesondere einen Photovoltaik-Wechselrichter mit wenigstens einer, vorzugsweise drei Teilschaltungen, wobei die Teilschaltung gebildet ist von zwei in Reihe geschalteten Wechselschaltern, welche in Reihe schaltbar sind zu zwei Gleichspannungsquellen und die Teilschaltung auch eine Kommutierungszelle umfasst, wobei zwischen den beiden Wechselschaltern ein zweites Verbindungsstück besteht, an welches eine Verbindungsbrücke anschließt und die Verbindungsbrücke mit einem ersten Verbindungsstück verbunden oder verbindbar ist, das zwischen den beiden Gleichspannungsquellen vorgesehen oder vorsehbar ist.

Der Kern der Erfindung liegt darin, dass eine Teilschaltung vorgeschlagen wird, die sowohl in der vorbeschriebenen Schaltungsanordnung, wie auch in den hier beschriebenen Umrichter optimalst eingesetzt werden kann. Die Ausprägung dieser Teilschaltung, welche von zwei in Reihe geschalteten Wechselschaltern, verschiedenen Verbindungsstücken beziehungsweise deren Anschlüssen, sowie einer Kommutierungszelle gebildet ist, zeichnet sich durch eine sehr geringe Anzahl von einzelnen Bauteilen aus, die zu den genau gleichen Vorteilen führt, wie sie schon bei der Schaltungsanordnung beschrieben wurden. Denn auch die erfindungsgemäßen Umrichter sind kostengünstig herstellbar und möglichst verlustarm, was einem hohen Wirkungsgrad entspricht.

Die erfindungsgemäßen Umrichter sind insbesondere zwischen zwei Gleichspannungsquellen beziehungsweise einer Gleichspannungsversorgung einerseits und einer Wechselstromquelle, zum Beispiel dem öffentlichen Stromnetz andererseits, angeordnet. Hieraus resultiert, dass ein Umrichter Verbindungen zum wahlfreien Anschluss an zwei Gleichspannungsquellen aufweist, aus welcher eine Anschließbarkeit resultiert, oder aber der Umrichter (fest) mit der Gleichspannungsquelle verbunden ist, der Umrichter also auch gleichzeitig eine Energiewelle umfasst. An dieser Stelle ist ausdrücklich darauf hinzuweisen, dass die Erfindung und die Offenbarung alle Merkmale, die zum Beispiel bezüglich der Schaltungsanordnung beschrieben worden sind, in gleicher Weise auf die erfindungsgemäße Umrichter verwendbar und als mitoffenbart anzusehen sind, wie auch umgekehrt, Merkmale, die nur im Zusammenhang mit dem Umrichter beschrieben und erläutert worden sind, im Sinne der Erfindung auch für die erfindungsgemäße Schaltungsanordnung als mitoffenbart und realisierbar anzusehen sind. Für den Fachmann ist diese Austauschbarkeit der jeweils beschriebenen Merkmale in Bezug auf die beiden Varianten der Erfindung klar.

In einem verbesserten Vorschlag des Umrichters ist vorgesehen, dass in dem den Wechselschaltern abgewandten Ausgangsstrang der Kommutierungszelle eine Induktivität oder Drossel vorgesehen ist, wobei die Induktivität insbesondere auch von der Wicklung eines Elektromotores gebildet ist. Der erfindungsgemäße Umrichter ist in seiner grundsätzlichen Topologie sowohl geeignet, im Bereich der Energieversorgung, also der Speisung von öffentlichen Netzen eingesetzt zu werden, wie auch für die unmittelbare Ansteuerung von Elektromotoren. Im letzteren Fall kann die Induktivität der Stromwicklung des Elektromotors genutzt werden.

Bevorzugt ist dabei der Umrichter als einstufige Wechselrichterstufe ausgebildet.

Der erfindungsgemäße Umrichter umfasst dabei Lösungen, bei welchen die mindesteens zwei Teilschaltungen jeweils eingangsseitig von ein- und denselben Gleichspannungsquellen versorgt werden oder aber alle oder zumindest ein Teil der Schaltungsanordnungen jeweils unterschiedliche Gleichspannungsquellen aufweist.

Im Sinne dieser Anmeldung umfasst dabei der Begriff Umrichter (als Ober- oder Sammelbegriff) sowohl Gleichstrom- wie auch Wechselstromumrichter und somit sowohl Wechselrichter wie auch Gleichrichter. Ein Wechselstromumrichter ist dabei ein Stromrichter bzw. Umrichter, der aus einer Wechselspannung eine in Frequenz und/oder Amplitude unterschiedliche Wechselspannung generiert. Als Wechselrichter, insbesondere als Solarwechselrichter, wird dabei ein Gerät bezeichnet, das Gleichspannung/Gleichstrom in Wechselspannung/Wechselstrom umrichtet. Gleichrichter dienen zur Umwandlung von Wechselspannung in Gleichspannung.

Die erfindungsgemäße Ausgestaltung des Umrichters mit den vorbeschriebenen Schaltungsanordnungen erlaubt es, den Umrichter zum Beispiel als einphasige Wechselrichterstufe auszubilden, oder auch eine mehrphasige Anordnung zu wählen. So ist es zum Beispiel vorgesehen, dass mindestens zwei Teilschaltungen eingangsseitig bezogen auf die Gleichspannungsquellen parallel geschaltet sind und zueinander phasenverschoben betrieben werden. Der Unterschied zwischen dem Betrieb der mindestens zwei Teilschaltungen wird durch entsprechende Ansteuerung der in der Schaltungsanordnung eingangsseitig vorgesehenen Wechselschalter realisiert.

In einer bevorzugten Ausgestaltung ist insbesondere vorgesehen, dass eingangsseitig am Umrichter eine Gleichspannungsversorgung, wie zum Beispiel ein Photovoltaik-Generator (zum Beispiel eine Solarzelle oder eine Batterie von Solarzellen bzw. ein Solarmodul), ein Energiespeicher, eine Superkapazität oder eine Batterie vorgesehen ist, die über einen kapazitiven Spannungsteiler die in Reihe geschalteten Gleichspannungsquellen bildet. Die Erfindung ist auf eine spezielle Ausgestaltung der Gleichspannungsquellen nicht beschränkt, diese können als diskrete Gleichspannungsquellen oder über einen kapazitiven Spannungsteiler realisiert sein, der seinerseits von einer beliebig ausgebildeten Gleichspannungsversorgung gespeist wird. Hierbei ist zu beachten, dass der Umrichter als Gerät zwischen der Gleichspannungsversorgung und der Wechselspannungsquelle, zum Beispiel dem öffentlichen Stromnetz angeordnet ist und üblicher Weise, in der gebräuchlicheren Variante der Umrichter gemäß dem Vorschlag nicht eine Gleichspannungsquelle beziehungsweise Versorgung umfasst. Schematisch ist die Gleichspannungsversorgung von den beiden vorgesehenen Gleichspannungsquellen getrennt, insbesondere dann, wenn die Gleichspannungsquellen durch einen kapazitiven Spannungsteiler realisiert wird. Der kapazitive Spannungsteiler ist bevorzugt als Teil des Umrichters realisiert (befindet sich im Gehäuse des Umrichters) und bildet somit die Gleichspannungsquelle, die insofern Teil des Umrichtes ist. Natürlich ist es möglich, eine Einheit von Gleichspannungsversorgung und Umrichter ebenfalls zu realisieren, auch eine solche Lösung gehört zur Erfindung.

Des Weiteren ist eingangsseitig, vor den Teilschaltungen, insbesondere zwischen Gleichspannungsversorgung und Spannungsteiler ein Gleichspannungswandler, insbesondere Hochsetzsteller oder ein bidirektionaler Gleichstromsteller angeordnet. Insbesondere der Einsatz eines symmetrischen, bidirektionalen Gleichstromstellers ist günstig, damit der Energiefluss in beide Richtungen möglich ist und der Energiespeicher geladen bzw. entladen werden kann.

Des Weiteren sind Anschlusspunkte vorgesehen, welche eingangsseitig vor beziehungsweise an den Teilschaltungen angeordnet sind, an welche weitere Komponenten anschließbar oder angeschlossen sind. Hierzu zählen zum Beispiel insbesondere zusätzliche Systemkomponenten wie zum Beispiel Ausgang eines Hochsetzstellers mit Photovoltaik-Generator oder ähnlichem, der hier angeschlossen werden kann.

Die Erfindung betrifft auch einen Photovoltaik-Wechselrichter mit wenigstens zwei, vorzugsweise drei Teilschaltungen nach einem der vorhergehenden Ausführungsformen. Dabei ist beispielsweise eine Ausgestaltung mit drei Teilschaltungen dafür geeignet, die unterschiedlichen Phasen für ein Drehstromnetz zur Verfügung zu stellen. Hierzu ist vorzugsweise dann noch ein dreiphasiger Tiefpassfilter den Teilschaltungen nach der Erfindung nachgeschaltet. Das heißt, dieser dreiphasige T-Filter befindet sich zwischen den drei Teilschaltungen nach der Erfindungen und den Ausgangsanschlüssen des Drehstromnetzes. Dabei wird die umzuwandelnde Gleichspannung wiederum von wenigstens einem Photovoltaikgenerator beziehungsweise einer entsprechenden Photovoltaikanlage zur Verfügung gestellt.

In der Zeichnung ist die Erfindung schematisch dargestellt. Es zeigen:
- Fig. 1: in einem Prinzipschaltbild die erfindungsgemäße Schaltungsanordung,
- Fig. 2: in einem Prinzipschaltbild eine Variante der Erfindung nach Fig. 1
- Fig. 3a, 3b: je in einem Prinzipschaltbild einen erfindungsgemäßen Umrichter (hier als dreiphasig ausgebildeter Photovoltaik-Wechselrichter realisiert)
- Fig. 4, 5: je in einem Prinzipschaltbild je eine Variante des Umrichters nach Fig. 3a

In den Figuren sind gleiche oder einander entsprechende Elemente jeweils mit den gleichen Bezugszeichen bezeichnet und werden daher, sofern nicht zweckmäßig, nicht erneut beschrieben.

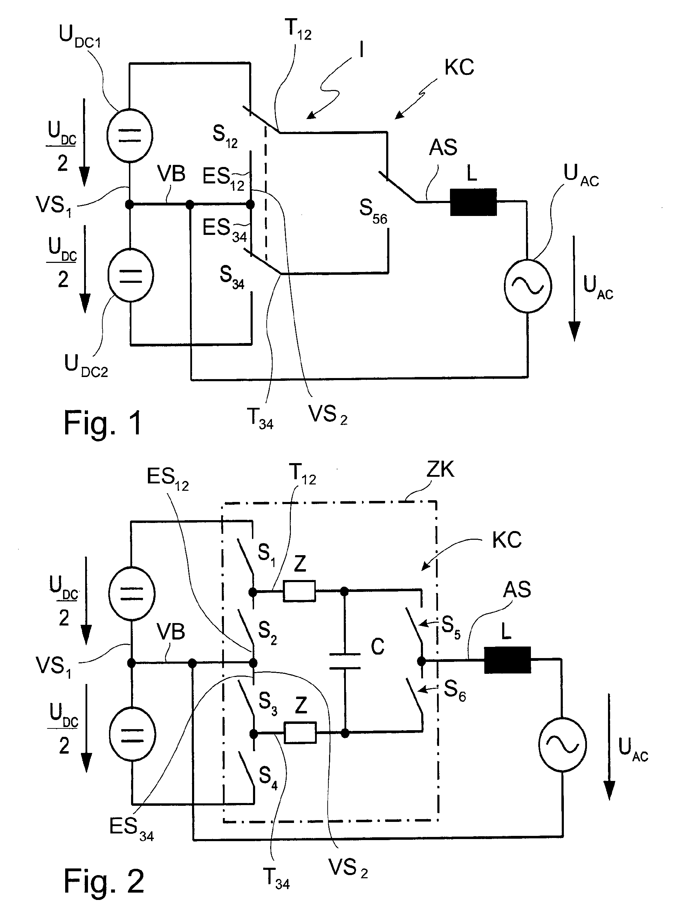

Fig. 1 zeigt das Schaltungsprinzip der erfindungsgemäßen Schaltungsanordnung am Ausführungsbeispiel einer einphasigen Wechselrichterstufe mit gleichstromseitiger Phasenumschaltung. Das gewählte Ausführungsbeispiel beschränkt in keinster Weise den erfindungsgemäßen Anwendungsbereich. Dabei ist die Schaltungsanordnung mit dem Bezugszeichen I gekennzeichnet. S₁₂ und S₃₄ sind funktional gekoppelte Wechselschalter, die mit der Grundschwingung des Ausgangssignal (z.B. 50 Hz bzw. der Netzfrequenz) umgeschaltet werden. Unter "funktional gekoppelt" ist hierbei zu verstehen, dass die beiden Wechselschalter jeweils nahezu gleichzeitig schalten. Eingangsseitig umfasst die Schaltungsanordnung. zwei Gleichspannungsquellen U_{DC1} und U_{DC2}. Geschickter Weise stellen die beiden Gleichspannungsquellen U_{DC1} und U_{DC2} die gleiche Gleichspannung U_{DC}/2 zur Verfügung. Die Erfindung ist hierauf jedoch nicht beschränkt, die Potentiale der beiden Gleichspannungsquellen U_{DC1} und U_{DC2} können auch unterschiedlich sein. Die beiden Gleichspannungsquellen U_{DC1} und U_{DC2} sind durch ein erstes Verbindungsstück VS₁ miteinander verbunden. Die erste Gleichspannungsquelle U_{DC1} ist mit dem ersten Wechselschalter S_{12ʹ} die zweite Gleichspannungsquelle U_{DC2} mit dem zweiten Wechselschalter S₃₄ verbunden. Zwischen den beiden Wechselschaltern S₁₂ befindet sich das zweite Verbindungsstück VS₂. Die beiden Verbindungsstücke VS₁, VS₂ sind ihrerseits durch die Verbindungsbrücke VB miteinander verbunden.

Das zweite Verbindungsstück VS₂ teilt sich auf in den Eingangsstrang ES₁₂ des ersten Wechselschalters S₁₂ sowie den Eingangsstrang ES₃₄ des zweiten Wechselschalters S₃₄. Des Weiteren weisen die beiden Wechselschalter S₁₂, S₃₄ ausgangsseitig, also den Gleichspannungsquellen U_{DC1}; U_{DC2} abgewandt jeweils einen Teilzweigabgang T₁₂ bzw. T₃₄ auf. Je nach Stellung der funktional gekoppelten Wechselschalter S₁₂, S₃₄ liegt jeweils die Gleichspannung der ersten Gleichspannungsquelle U_{DC1} oder der zweiten Gleichspannungsquelle U_{DC2} zwischen den beiden Teilzweigabgängen T₁₂, T₃₄ an.

Wie bereits mehrfach ausgeführt, werden die beiden Wechselschalter S₁₂, S₃₄ mit der Netzfrequenz bzw. Grundfrequenz (in der Regel 50 Hz oder 60 Hz) umgeschaltet. Aufgrund der Schalterstellung der Wechselschalter S₁₂, S₃₄ liegt die bezogen auf das Niveau der Verbindungsbrücke positive oder negative Spannung U_{DC}/2 an den Teilzweigabgängen T₁₂ bzw. T₃₄ an.

An die Teilzweigabgänge T₁₂, T₃₄ schließt sich dann die Kommutierungszelle KC an, die aus einem schnellschaltenden bzw. schnellschaltbaren Wechseltaktschalter S₅₆ gebildet ist. Die Kommutierungszelle (übliche Betriebsfrequenz 5 oder mindestens 10 kHz, bevorzugt mindestens 20 oder 30 kHz) ist für die Stromformung des Wechselstromes verantwortlich. Am Ausgangsstrang AS der Kommutierungszelle KC schließt sich die Induktivität L an, die für die Bildung des bevorzugt sinusförmigen Wechselspannungsverlaufes dient. Zwischen dem der Kommutierungszelle abgewandten Anschluss der Induktivität L und der Verbindungsbrücke VB ist dann ausgangsseitig an der Wechselspannungsquelle U_{AC} eine Wechselspannung abgreifbar.

Die Baugruppe, welche gebildet ist aus den beiden Wechselschaltern S₁₂ und S₃₄ und der Kommutierungszelle KC wird als Teilschaltung ZK beschrieben, dies ist zum Beispiel in Fig. 2 stichpunktiert angedeutet.

In Fig. 2 ist bereits eine ausführungsnähere Variante gezeigt, bei welcher die Wechselschalter S₁₂, S₃₄ aufgelöst sind in je zwei hintereinander angeordnete Schalter S₁, S₂, S₃ und S₄. In den Teilzweigabgängen T₁₂ bzw. T₃₄ ist je eine Impedanz, vor einer die Impedanz verbindenden bzw. die Teilzweigabgänge T₁₂, T₃₄ verbindenden Kapazität C, vorgesehen. Die Impedanz Z dient der Strombegrenzung und ist üblicher Weise aus einer Anordnung oder Kombination mindestens eines Widerstandes und/oder Kondensators und/oder Spule bzw. Induktivität gebildet. Über der Kapazität C liegt (theoretisch) die halbe Eingangsspannung der Gleichspannungsquelle U_{DC}/2, sie dient insbesondere zur Pufferung des Umschaltvorgangs. In dem in Fig. 2 gezeigten Ausführungsbeispiel ist der Wechseltaktschalter S₅₆ aufgelöst in zwei hintereinander angeordneten Taktschaltern S₅ und S₆, die insofern funktional gekoppelt sind, um die Umschalt- bzw. Kommutierungsfunktion zu erfüllen. Bevorzugt sind diese zum Beispiel pulsbreitenmoduliert angesteuert. Die Ansteuerung der Schalter S₁ bis S₄ bzw. Taktschalter S₅, S₆ ist nicht gezeigt, aber selbstverständlich vorgesehen. Die Schaltfrequenz der Taktschalter S₅, S₆ ist viel höher als die Grundschwingung und. beträgt z.B. 20 kHz. Die Taktschalter S₅, S₆ und Kondensator/- Kapazität C bilden die eigentliche Kommutierungszelle KC. Die Taktschalter S₅ und S₆ müssen deshalb gute Kommutierungseigenschaften (z.B. IGBT mit Freilaufdiode oder MOSFET mit schneller Bodydiode) aufweisen. Mit Hilfe einer überlagerten Regelung kann durch die Drossel L ein bipolares sinusförmiges Stromsignal erzeugt werden, das in eine Wechselspannungsquelle eingespeist wird. Durch diese Ausgestaltung der Schaltungsanordnung nach der Erfindung gelingt es, eine solche zur Verfügung zu stellen, die die aufwendigen Schaltungen im Stand der Technik ablöst und mit deutlich geringerem Kostenaufwand herzustellen ist. Günstigerweise wird dabei gleichzeitig auch noch der Wirkungsgrad einer solcher Schaltung gesteigert.

Bei dem in Fig. 2 gezeigten Ausführungsbeispiel sind die Wechselschalter der gleichstromseitigen Phasenumschaltung diskret aus Schaltern S₁ bis S₄ ausgeführt. Die Schalter S₁ bis s₄ sind vorzugsweise durch jeweils parallel geschaltete MOSFETs realisiert, wodurch äußerst geringe Verluste realisierbar sind.

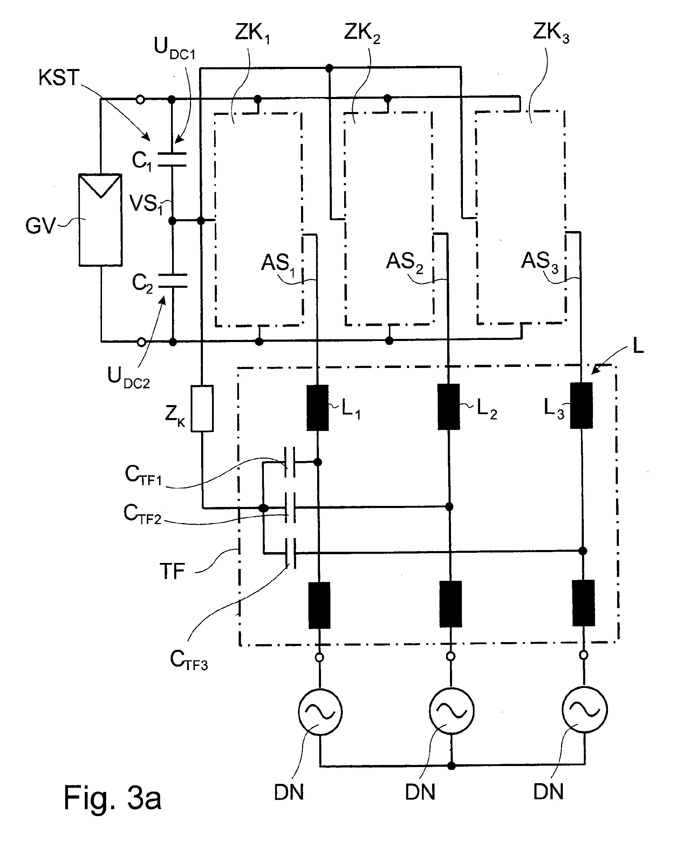

Fig. 3a zeigt ein Ausführungsbeispiel für einen dreiphasigen Photovoltaik-Wechselrichter. Die Stromformung erfolgt jetzt anstatt mit einer einfachen Drossel mit einem dreiphasigen T-Filter TF, bei dem der Kondensatorsternpunkt über eine Koppelimpedanz Zₖ an die Mitte der Zwischenkreiskondensatoren angeschlossen ist. An den in Reihe geschalteten Kondensatoren C_{1,} C₂ steht die Gleichspannung U_{DC}/2 zur Verfügung, die Zwischenkreiskondensatoren bilden einen kapazitiven Spannungsteiler KST, der von der Gleichspannungsversorgung GV (zum Beispiel eine Photovoltaik-Anlage oder Photovoltaik-Generator) gespeist wird. Zwischen den beiden Kapazitäten C₁, C₂ ist das erste Verbindungsstück VS₁ vorgesehen, welche die beiden Gleichspannungsquellen U_{DC1} bzw. U_{DC2} verbindet. An diese erste Verbindungsstrecke VS₁ ist die Koppelimpedanz Zₖ und somit auch die T-Filter-Anordnung TF angeschlossen. Diese Koppelimpedanz Zₖ kann aus einer wahlfreien Kombination von Widerständen, Induktivitäten und/oder Kapazitäten bestehen und hat die Aufgabe, die entstehenden Stromverzerrungen durch die Taktung selektiv in den Zwischenkreis zurückzuführen. Hierzu ist in dem in Fig. 3a gezeigten Ausführungsbeispiel der dem T-Filter abgewandte Anschluss der Koppelimpedanz Zₖ mit der ersten Verbindungsstrecke VS₁, die zwischen den beiden Kapazitäten C_{1,} C₂ angeordnet ist, verbunden. Das ausgangsseitige Drehstromnetz ist mit DN gekennzeichnet.

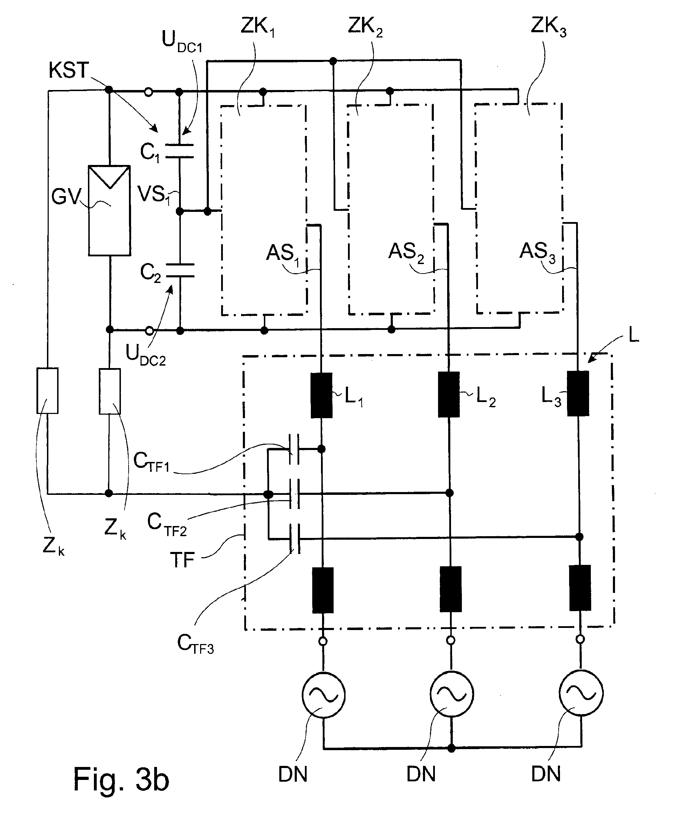

Fig. 3b zeigt einen alternativen Aufbau zu dem Vorschlag nach Fig. 3a. Im Unterschied zu der Ausgestaltung nach Fig. 3a ist bei Fig. 3b der Anschluss der Koppelimpedanz Zₖ anders gelöst. Es ist hierbei möglich, die Koppelimpedanz Zₖ aufzuteilen und am dem Plus- beziehungsweise Minuspol des Zwischenkreises (den kapazitiven Spannungsteiler KST) anzuschließen. Dabei umfasst dieser Vorschlag sowohl eine Lösung, bei welcher nur ein Anschluss an dem Pluspol, ein Anschluss an dem Minuspol des Zwischenkreises oder sowohl ein Anschluss am Plus- und Minuspol vorgesehen ist. Plus- und Minuspol des Zwischenkreises ist dabei der Anschlussbereich an den Zwischenkondensatoren C₁, C₂, die von der ersten Verbindungsstrecke VS₁ abgewandt ist.

Das erfindungsgemäße Ausführungsbeispiel nach Fig. 3 ist dabei so gebildet, dass insgesamt drei Teilschaltungen ZK₁, ZK₂, ZK₃ eingangsseitig, bezogen auf die Gleichspannungsquellen U_{DC1} bzw. U_{DC2} (bzw. der Gleichstromversorgung GV) parallel geschaltet sind und zueinander um 120° phasenverschoben betrieben werden. Hieraus resultiert das dreiphasige Drehstromnetz. An den jeweiligen Ausgangssträngen AS₁, AS₂ und AS₃ schließen sich dann die T-Filter TF₁, TF₂, TF₃ des dreiphasigen T-Filters TF an.

Die T-Filter TF₁, TF₂, TF₃ bestehen dabei aus zwei in Reihe angeordneten Induktivitäten, die zwischen sich über einen Abzweig und der Kapazität C_{TF1}, C_{TF2}, C_{TF3} auf die Koppelimpedanz Zₖ verbunden ist, wobei die in Stromflussrichtung erste Induktivität L₁, L₂, L₃ selbstverständlich die Induktivität L der Schaltungsanordnung nach Fig. 1 sein kann oder aber eine zusätzliche Induktivität ist.

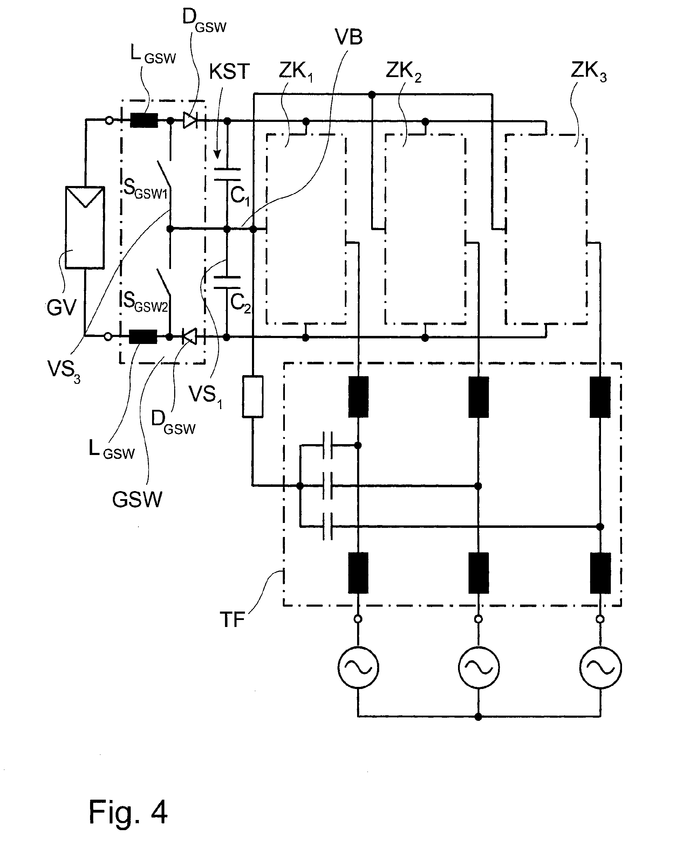

Fig. 4 zeigt ausgehend von Fig. 3a, b eine Erweiterung der Umrichteranordnung (hier am Beispiel eines dreiphasigen Photovoltaik-Wechselrichters) mit einem, dem kapazitiven Spannungsteiler (= dem Zwischenkreis) vorgeschalteten Gleichspannungswandler GSW. Der Gleichspannungswandler GSW ist zum Beispiel als symmetrischer Hochsetzsteller ausgeführt und befindet sich (im Betrieb) zwischen der Gleichstromversorgung GV und dem kapazitiven Spannungsteiler KST.

Der hier gezeigte symmetrische Hochsetzsteller besteht aus einem in der Leitung zwischen der Gleichspannungsversorgung GV und dem kapazitiven Spannungsteiler KST angeordneten Induktivität L_{GSW} und Diode D_{GSW}, wobei diese Anordnung beidseitig an der Gleichspannungsversorgung GV vorgesehen ist. Die Verbindungsbrücke VB, die zwischen den Kondensatoren C₁, C₂ der kapazitiven Spannungsteilung KST liegt (dies entspricht den beiden Gleichspannungsquellen U_{DC1} und U_{DC2}), ist verlängert in Richtung einer dritten Verbindungsstrecke VS₃. Diese dritte Verbindungsstrecke VS₃ verbindet zwei Schalter S_{GSW1} und S_{GSW2}. Die Strecke Schalter S_{GSW1}, dritte Verbindungsstrecke VS₁ und zweiter Schalter S_{GSW2} ist dabei jeweils zwischen die Verbindung der Induktivität L_{GSW} und Diode D_{GSW} an den beiden Anschlüssen der Gleichspannungsversorgung angeordnet.

Grundsätzlich können die Schalter bzw. Taktschalter S_{GSW1} bzw. S_{GSW2} des Hochsetzstellers synchron oder versetzt zu den Taktschaltern S₅, S₆ getaktet werden, wodurch die Generatorpotentiale gegenüber dem Erdbezug steuerbar sind.

Der hier eingesetzte Hochsetzsteller ermöglicht eine Vergrößerung des möglichen Eingangsspannungsbereichs hin zu tieferen Spannungen. Als Ausführungsvariante können die Dioden in dem Hochsetzsteller als aktive Schalter realisiert werden, wodurch mit synchronem Freilauf die Leitendverluste weiter reduziert werden können.

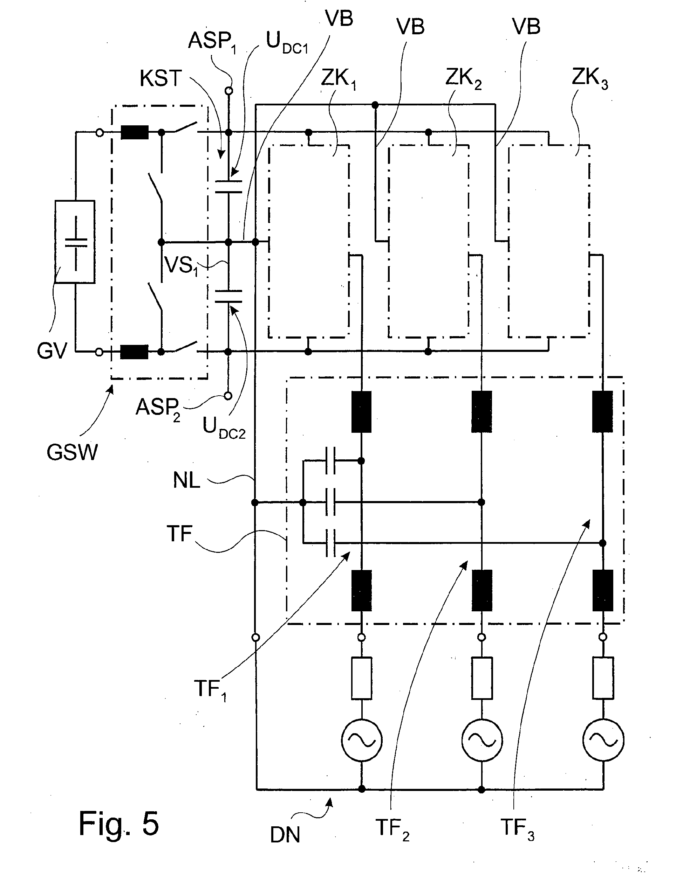

Das Ausführungsbeispiel nach Fig. 5 baut auf dem Vorschlag nach Fig. 4 auf. Wiederum werden nur die Ergänzungen gegenüber der Fig. 4 erläutert.

Im Vergleich zu Fig. 4 ist hier ein symmetrischer, bidirektionaler Gleichstromwandler GSW vorgesehen, damit der Energiefluss in beide Richtungen möglich ist und der Energiespeicher, der die Gleichspannungsversorgung GV bildet, geladen und entladen werden kann. In dem hier gezeigten Ausführungsbeispiel ist zum Beispiel die Gleichspannungsversorgung GV als Energiespeicher, zum Beispiel als Kapazität, Super- oder Ultracab oder Batterie bzw. Akkumulator ausführbar. Insbesondere ist hier ein Neutralleiter NL vorgesehen, der mit dem zwischen den Gleichspannungsquellen U_{DC1} und U_{DC2} vorgesehenen ersten Verbindungsstück VS₁ verbunden ist und insbesondere Teil eines Drehstromnetzes DN ist.

Des Weiteren ist ausgangsseitig an den jeweiligen Teilschaltungen ZK₁, ZK_{2,} ZK₃ ein Filter, insbesondere ein T-Filter (TF₁, TF₂, TF₃) vorgesehen. Zwischen der Gleichspannungsversorgung GV, insbesondere nach dem Gleichspannungswandler GSW sind zusätzliche Anschlüsse ASP₁, ASP₂ an den Teilschaltungen ZK₁, ZK₂, ZK₃ vorgesehen, um zusätzliche Systemkomponenten wie zum Beispiel Ausgang eines Hochsetzstellers mit Photovoltaik-Generator usw. anzuschließen.

Der Neutralleiter NL ist als belastbarer Neutralleiteranschluss ausgebildet, damit auch schieflagige Lasten oder Netze bedient werden können. Der Anwendungsbereich des Vorschlages gemäß Fig. 5 liegt insbesondere im Aufbau von Inselnetzen, wie auch in der Spannungsstützung an weichen Netzknoten, zum Beispiel der Anlaufunterstützung von Elektromotoren bei langen Zuleitungen. Der Vorschlag gemäß Fig. 5 dient auch zur Schieflastsymmetrierung bei dreiphasigen Netzen mit einphasigen Verbrauchern oder Einspeisern. Des Weiteren wird mit dem Vorschlag nach Fig. 5 eine Oberschwingenreduktion an belasteten Netzwerken erreicht, das heißt, die Qualität des Netzes wird verbessert.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden, oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Schaltungsanordnung, insbesondere Wechselrichterstufe mit gleichstromseitiger Phasenumschaltung mit
- zwei eingangsseitigen Gleichspannungsquellen (U_{DC1}, U_{DC2}),
- zwei funktional gekoppelten Wechselschaltern (S₁₂, S₃₄),
- einer Kommutierungszelle (KC),
- einer Drossel (L) sowie
- einer ausgangsseitigen Wechselspannungsquelle (U_{AC}).

2. Schaltungsanordnung, insbesondere Wechselrichterstufe mit gleichstromseitiger Phasenumschaltung, insbesondere nach Anspruch 1, wobei zwei Gleichspannungsquellen (U_{DC1,} U_{DC2}) und zwei Wechselschalter (S₁₂; S₃₄) in Reihe geschaltet sind, zwischen den beiden Gleichspannungsquellen (U_{DC1}; U_{DC2}) ein erstes Verbindungsstück (VS₁) besteht, zwischen den beiden Wechselschaltern (S₁₂; S₃₄) ein zweites Verbindungsstück (VS₂) besteht und eine Verbindungsbrücke (VB) zwischen dem ersten (VS₁) und dem zweiten (VS₂) Verbindungsstück vorgesehen ist und sich ausgangsseitig zwischen den Teilzweigabgängen (T₁₂; T₃₄) der Wechselschalter (S₁₂; S₃₄) eine Kommutierungszelle (KC) anschließt und zwischen dem, den Wechselschaltern (S₁₂; S₃₄) abgewandten Ausgangsstrang (AS) der Kommutierungszelle (KC) und der Verbindungsbrücke (VB) in einer Wechselspannungsquelle (U_{AC}) eine Wechselspannung abgreifbar ist.

3. Schaltungsanordnung nach Anspruch 1 oder 2, **dadurch gekennzeichnet, dass** zwischen den Teilzweigabgängen (T₁₂; T₃₄) der Wechselschalter (S₁₂; S₃₄) eine Kommutierungszelle (KC) vorgesehen ist, die wahlweise über die Wechselschalter (S₁₂; S₃₄) mit der ersten (U_{DC1}) oder zweiten Gleichspannungsquelle (U_{DC2}) verbindbar ist.

4. Schaltungsanordnung nach einem der vorhergehenden Ansprüche, **dadurch gekennzeichnet, dass** in dem, den Wechselschaltern (S₁₂; S₃₄) abgewandten Ausgangsstrang (AS) der Kommutierungszelle (KC) eine Drossel (L) vorgesehen ist.

5. Schaltungsanordnung nach einem der vorhergehenden Ansprüche, **dadurch gekennzeichnet, dass** die Kommutierungszelle (KC) entweder gebildet ist aus
- einem Wechseltaktschalter (S₅₆) oder
- einer zwischen den Wechselschaltern (S₁₂; S₃₄) angeordnete Kapazität (C) und einem zur Kapazität (C) parallelen Wechseltaktschalter (S₅₆),
wobei insbesondere der Wechseltaktschalter (S₅₆) aus zwei zueinander in Reihe angeordneten Taktschaltern (S₅; S₆) besteht.

6. Schaltungsanordnung nach einem der vorhergehenden Ansprüche, **dadurch gekennzeichnet, dass** der den Wechselschaltern (S₁₂; S₃₄) abgewandte Ausgangsstrang (AS) der Kommutierungszelle (KC) zwischen den beiden Taktschaltern (S₅; S₆) beginnt.

7. Schaltungsanordnung nach einem der vorhergehenden Ansprüche, **dadurch gekennzeichnet, dass** ein Wechselschalter (S₁₂; S₃₄) gebildet ist von zwei hintereinander angeordneten, bevorzugt als Halbleiterschalter ausgebildeten Schaltern (S₁; S₂; S₃; S₄), wobei das Verbindungsstück (VS₂) zwischen den beiden Wechselschaltern (S₁₂; S₃₄) wahlweise mit dem einen oder anderen Teilzweigabgang (T₁₂; T₃₄) über den in Stromflussrichtung ersten Schalter (S₂; S₃) der Wechselschalter (S₁₂; S₃₄) verbunden ist.

8. Schaltungsanordnung nach einem der vorhergehenden Ansprüche, **dadurch gekennzeichnet, dass** in der Kommutierungszelle (KC), bevorzugt zwischen zumindest einem Teilzweigabgang (T₁₂; T₃₄) und der Kapazität (C) mindestens eine Impedanz (Z) vorgesehen ist.

9. Schaltungsanordnung nach einem der vorhergehenden Ansprüche, **dadurch gekennzeichnet, dass** die Wechselschalter (S₁₂; S₃₄) funktional gekoppelt sind und mit der Grundfrequenz des Ausgangssignals, z.B. der Netzfrequenz, insbesondere 50 Hz, umgeschaltet werden.

10. Schaltunganordnung nach einem der vorhergehenden Ansprüche, **dadurch gekennzeichnet, dass** die Kommutierungszelle (KC) beziehungsweise der Wechseltaktschalter (S₅₆) oder die Taktschalter (S₅; S₆) mit einer Schaltfrequenz betrieben wird/werden, die mindestens 100 mal größer, bevorzugt mindestens 200 mal, insbesondere bevorzugt mindestens 500 mal größer ist als die Grundfrequenz.

11. Umrichter, insbesondere Photovoltaik-Wechselrichter mit wenigstens einer, vorzugsweise drei Teilschaltungen (ZK), wobei die Teilschaltung (ZK) gebildet ist von zwei in Reihe geschalteten Wechselschaltern (S₁₂; S₃₄), welche in Reihe schaltbar sind zu zwei Gleichspannungsquellen (U_{DC1}; U_{DC2}) und die Teilschaltung (ZK) auch eine Kommutierungszelle (KC) umfasst, wobei zwischen den beiden Wechselschaltern (S₁₂; S₃₄) ein zweites Verbindungsstück (VS₂) besteht, an welches eine Verbindungsbrücke (VB) anschließt, und die Verbindungsbrücke (VB) mit einem ersten Verbindungsstück (VS₁) verbunden oder verbindbar ist, das zwischen den beiden Gleichspannungsquellen (U_{DC1};U_{DC2}) vorgesehen oder vorsehbar ist.

12. Umrichter nach Anspruch 11, **dadurch gekennzeichnet, dass** die Wechselrichterstufe als einphasige Wechselrichterstufe ausgebildet ist und/oder in dem den Wechselschaltern (S₁₂; S₃₄) abgewandten Ausgangsstrang (AS) der Kommutierungszelle eine Induktivität oder Drossel (L) vorgesehen ist, wobei die Induktivität insbesondere von der Wicklung eines Elektromotors gebildet ist und/oder mindestens zwei Teilschaltungen (ZK₁, ZK₂, ZK₃) eingangsseitig, bezogen auf die Gleichspannungsquellen (U_{DC1}, (U_{DC2}) parallel geschaltet sind und zueinander phasenverschoben betrieben werden.

13. Umrichter nach einem oder mehreren der vorhergehenden Ansprüche 11 bis 12, **dadurch gekennzeichnet, dass** eingangsseitig am Umrichter eine Gleichspannungsversorgung (GV), wie z. B. ein Photovoltaikgenerator, ein Energiespeicher, eine Superkapazität oder eine Batterie vorsehbar ist, die über einen kapazitiven Spannungsteiler (KST) des Umrichters die in Reihe geschalteten Gleichspannungsquellen (U_{DC1}; U_{DC2}) bildet.

14. Umrichter nach einem oder mehreren der vorhergehenden Ansprüche 11 bis 13, **gekennzeichnet durch** einen Neutralleiter (NL), der mit dem zwischen den Gleichspannungsquellen (U_{DC1}; U_{DC2}) vorgesehenen ersten Verbindungsstück (VS₁) verbunden ist, und insbesondere Teil eines Drehstromnetzes (DN) ist und/oder sich ausgangsseitig an der jeweiligen Teilschaltung (ZK₁, ZK₂, ZK₃) ein Filter, insbesondere ein T-Filter (TF₁, TF₂, TF₃) anschließt.

15. Umrichter nach einem oder mehreren der vorhergehenden Ansprüche 11 bis 14, **dadurch gekennzeichnet, dass** eingangsseitig vor den Teilschaltungen (ZK₁, ZK₂, ZK₃), insbesondere zwischen Gleichspannungsversorgung (GV) und Spannungsteiler (KST) ein Gleichspannungswandler (GSW), insbesondere ein Hochsetzsteller oder ein bidirektionaler Gleichstromsteller angeordnet ist und/oder Anschlusspunkte (ASP₁, ASP₂) vorgesehen sind, welche eingangsseitig vor beziehungsweise an den Teilschaltungen (ZK₁, ZK₂, ZK₃) angeordnet sind, an welchen weitere Komponente/n anschließbar ist/sind oder angeschlossen ist/sind.
